# EUROPEAN PATENT SPECIFICATION

(11) **EP 2 468 058 B1**
(45) Date of publication and mention of the grant of the patent: **04.09.2013**
(21) Application number: 10736692.4
(22) Date of filing: 22.07.2010
(51) Int. Cl.: H04W 72/12, H04W 88/10

(54) **WIRELESS NETWORK PROTOCOL COEXISTENCE**
KOEXISTENZ VON FUNKNETZWERKPROTOKOLLEN
COEXISTENCE DE PROTOCOLE DE RÉSEAU SANS FIL

(30) Priority: 27.07.2009 GB 0913046
(43) Date of publication of application: 27.06.2012
(73) Proprietor: Cambridge Silicon Radio Limited, Cambridge, Cambridgeshire CB4 OWZ (GB)
(72) Inventor: THOUKYDIDES, Alexander, Cambridge CB24 8XL (GB); ARMSTRONG, Dean, Cambridge CB5 8NS (GB)
(74) Representative: Howell, Matthew Dafydd
(86) International application number: PCT/EP2010/060620
(87) International publication number: WO 2011/012528

(56) References cited:
- EP-A1- 1 703 675
- GB-A- 2 391 137
- US-A1- 2006 239 223
- US-A1- 2009 137 206

## Description

The present invention relates to techniques for improving coexistence of multiple collocated wireless protocol transceivers.

More specifically, an aspect of the invention relates to improving coexistence between an IEEE 802.11 (or Wi-Fi) transceiver operating as an access point (AP) and a collocated Bluetooth transceiver. This is achieved by manipulation of the Network Allocation Vector mechanism in the IEEE 802.11 transceiver in order to avoid simultaneous and mutually interfering operation of the IEEE 802.11 and Bluetooth transceivers on the device.

### Backrgound

A well understood problem in the field of networks is the difficulties with transmission collision between nodes using a shared transmission medium. A network comprising a shared transmission medium and multiple nodes communicating with each other over the shared transmission medium typically requires a strict protocol defining when each node may transmit information over the network and when it must be limited to receiving only. If two nodes attempt to transmit simultaneously over a shared transmission medium, both transmissions can be lost due to cross-interference.

One method of addressing this problem is the use of Carrier Sense Multiple Access (CSMA) protocol. This protocol is a multiple access method in which a node verifies that the shared transmission medium is not being used by any other node before transmitting. In CSMA, the node checks to see whether a carrier signal exists on the shared transmission medium. If a carrier signal is detected, the node determines that the shared transmission medium is currently in use. Once a carrier signal is no longer detected, the node begins its own transmission.

An important aspect of CSMA is the behaviour of the transmitting node when it detects that a collision has occurred during transmission. A type of CSMA used in physical shared transmission medium (e.g. Ethernet cable networks) is Carrier Sense Multiple Access with Collision Detection (CSMA/CD). This protocol requires that the transmitting node must stop transmitting as soon as it detects a collision and wait for a random time interval before attempting a retry of the transmission. The random time delay reduces the likelihood of a repeated collision.

In networks where the shared transmission medium is a wireless network, an extra difficulty is introduced. Transceivers are typically incapable of receiving whilst transmitting onto the wireless network. Therefore, they are unable to detect if a collision occurs whilst they are transmitting. Another modification to the CSMA protocol exists which addresses these problems by relying on a 'carrier sense' function. Carrier Sense Multiple Access with Collision Avoidance (CSMA/CA) describes a protocol wherein a transceiver wishing to transmit enters receive mode first in order to detect any transmission energy from other transceivers. If the shared transmission medium is sensed as being in use, the node defers transmission for a 'random' interval to avoid colliding.

In effect, this reduces the probability of collisions on the network as the individual nodes transmit less aggressively.

Another problem with wireless networks is the 'hidden node' problem. Some wireless networks may be set up such that some outlying nodes are beyond transmission range from certain other nodes on the network, whereas an intermediate node is capable of receiving signals from both outlying nodes. In this case, it would be difficult for an outlying node to determine if it is colliding with the other outlying node. The IEEE 802.11-2007 standard defines a virtual carrier sense mechanism called the Network Allocation Vector (NAV). A virtual carrier sense mechanism is a logical abstraction of a carrier sense mechanism. In one implementation, a frame received across the network has a header which contains a Frame Duration field. The Frame Duration field specifies the time necessary to complete the current frame exchange sequence, exclusive of the duration of the frame being transmitted. For example, the Duration value for a unicast data frame is a Short Interframe Space (SIFS) plus the time required for transmission of one ACK frame. The outlying node can then use the information received in the Frame Duration field to update the NAV accordingly. When the node then needs to transmit over the network, it is able to reference both the physical carrier sense and the NAV to determine whether the shared transmission medium is in use and adjust its transmission time accordingly.

Many modern communications devices, such as mobile phones, contain two transceivers; one configured to transmit and receive using the IEEE 802.11 protocol and one configured to transmit and receive using the Bluetooth protocol. IEEE 802.11 and Bluetooth transceivers operating at the same time in close vicinity can interfere with each other's operation. When the transceivers are collocated within the same device it is often impossible to achieve sufficient isolation to enable reception on either transceiver when the other one is transmitting, even when the transceivers are operating on non-overlapping frequencies. Furthermore, where a single antenna is switched between the two transceivers, reception/transmission on one will exclude the other.

Coexistence techniques have been developed for mitigating these issues and achieving acceptable performance for IEEE 802.11 devices operating as clients of infrastructure access points (AP). Initial attempts to solve coexistence between Bluetooth and 2.4GHz IEEE 802.11 relied on per-packet arbitration between the MAC layers at devices with collocated transceivers - denying operation of one of the transceivers when their activity would conflict. One approach (although not the detailed implementation) was standardised as Packet Traffic Arbitration (PTA) in IEEE 802.15.2 clause 6.

More advanced schemes attempt to avoid the need for arbitration by controlling the timing of transmissions by the peer IEEE 802.11 devices. In the case of a device having a Bluetooth transceiver and being an IEEE 802.11 non-Access Point station operating in an infrastructure Basic Service Set (BSS), the power save modes defined by the standard can provide a mechanism for preventing mutual interference, particularly when the Bluetooth activity is periodic. However, due to extra responsibilities placed on an Access Point for managing the wireless network, including being awake continuously and transmitting periodic beacons, these power saving techniques are not applicable.

An IEEE 802.11 network can operate in two modes. In 'infrastructure mode', an IEEE 802.11 network requires an Access Point (AP). The AP device provides an interface to a distribution system (e.g., Ethernet), which enables wireless users to utilize corporate servers and Internet applications. The collection of devices formed by the access point and the client devices located within its coverage area is called an infrastructure basic service set (infrastructure BSS). The AP manages the wireless network, periodically sending out beacons and relaying data between associated stations.

In ad-hoc mode, the stations communicate with one another without an access point directing the communication. No base station is used. This is accomplished using the Independent Basic Service Set (IBSS).

There is increasing requirement for mobile devices supporting AP functionality - both for the traditional application of providing internet connectivity (via a cellular transceiver's internet connectivity) and for newer 'ad-hoc' networking applications (such as Intel's My Wi-Fi and the Wi-Fi Alliance's Peer-to-Peer). Users of the device expect the AP functionality to continue working at the same time as Bluetooth, just as the non-AP application has. However, the packet arbitration techniques are insufficient on their own to achieve sufficient performance at a device operating as an AP. Without better techniques, a high packet error rate will be experienced by devices attempting to transmit to the AP when Bluetooth is being used at the device hosting the AP. This is due to the AP being either unable to receive the transmissions due to interference from the Bluetooth transmitter, or unable to transmit required responses due to packet arbitration. In systems that used shared resources, such as a switched antenna, transmissions may not be received where the resources to receive the transmission are not available at that moment to the receiver. These causes for dropped packets can result in a 'death spiral', in which the associated device (rather than the AP) reduces its data rate due to a perceived poor channel quality, and the resulting longer packets suffer a higher error rate due to their increased chance of collision. The net result is unacceptably low throughput or, in severe cases, the device considering that the AP is no longer available.

As previously mentioned, one improvement over the arbitration techniques has been an attempt to coordinate the activities of the Bluetooth and IEEE 802.11 transceivers to avoid operating simultaneously - at least for certain critical traffic. Due to the fixed packet timings of Bluetooth (especially for SCO/eSCO and sniff) these approaches have generally concentrated on fitting the IEEE 802.11 traffic around the Bluetooth activity. For the most part these techniques have been restricted to implementations at non-AP devices. This is because devices that incorporate both Bluetooth and IEEE 802.11 have traditionally not supported operation as an AP, and they cannot rely on there being any coexistence support in the peer IEEE 802.11 device. It is also generally simpler to solve coexistence problems at the client of the AP because the IEEE 802.11 standard requires the AP to be awake continuously in order to receive data transmitted to it at any time.

One approach to addressing coexistence issues at an AP is the use of alternating wireless medium access (AWMA) as defined by clause 5 of IEEE 802.15.2. This allocates different portions of the IEEE 802.11 beacon period to exclusive operation of each transceiver protocol. This can, in theory, be applied regardless of which device(s) in the BSS have collocated Bluetooth, including at the AP. However, in practice it is not useful, as it requires that all devices in the BSS support AWMA. Currently, few, if any, devices implement it. Furthermore, its timing granularity is too coarse to support Bluetooth voice links as only a single period of Bluetooth activity is allowed in each beacon interval. Bluetooth voice links need to maintain frequent low latency transmissions in order to provide a low latency voice link.

Finally, the draft IEEE 802.11v amendment is introducing a mechanism called Collocated Interference Reporting to enable devices to discover whether their peers are suffering interference due to collocated transceivers. This is intended to support scheduling of transmissions by the non-collocated device (which may be an AP or non-AP device) so as to minimise interference. However, no current devices support it, and it is too early to predict how many (if any) new devices will or how much they will respect it. Hence, it is not currently a useful technique.

European patent application publication number 1 703 675 A1 describes a game apparatus comprising first and second wireless communication modules for performing communication utilising Bluetooth and IEEE protocols respectively.

UK patent application publication number 2 391 137 A describes a dual mode access point which supports both 802.11 a and 802.11 b Wireless Local Area Network standards simultaneously by use of Contention Free Periods.

US patent application publication number 2009/0137206 A1 describes a method for achieving coexistence between a Bluetooth system and WLAN system collocated in the same communications device such as a mobile terminal, including prediction of Bluetooth high priority traffic windows.

What is needed is a method of improving coexistence of collocated transceivers operating according to different protocols.

According to a first aspect of the invention, there is provided a communication device configured to communicate with a first wireless network by means of a first protocol and communicate with a second wireless network by means of a second protocol, the second protocol specifying that, in response to a signal of a pre-defined format, a device on the second network should not transmit on the second network for at least one period of time, the communication device being configured to transmit a signal according to the second protocol so as to indicate to devices on the second network that they should not transmit during a first period of time, and subsequent to the above transmitting step, transmit or receive signals by means of the first protocol during the first period of time, wherein the communication device is characterised in that it is configured to use the following criteria to determine the signal used to indicate to devices on the second network that they should not transmit during a first at least one period of time:
(i) when the signal transmitted by means of the first protocol is due to begin imminently, the step of transmitting a signal according to the second protocol so as to indicate to devices on the second network that they should not transmit during a first period of time comprises sending to the devices, immediately prior to the start of the communication between the communication device and the first wireless network, a frame indicating the period of time that the communication device will be communicating with the first wireless network;
(ii) when the signal transmitted by means of the first protocol is known in advance the step of transmitting a signal according to the second protocol so as to indicate to devices on the second network that they should not transmit during a first period of time comprises sending, to the devices, a frame containing an indication of at least one period of time during which the communication device may be communicating with the first wireless network; and
(iii) when the signal transmitted by means of the first protocol comprises a bulk data transfer and there are no latency restrictions on the second network, the step of signalling devices on the second network to indicate that they should not transmit during a first period of time comprises sending, to the devices, a frame containing an indication of a period of time immediately following the frame during which the communication device may be communicating with the first wireless network.

Aspects of the present invention as defined in claims 1 and 26 will now be described by way of example with reference to the accompanying drawing.
Figure 1 shows collocated Bluetooth and IEEE 802.11 networks controlled by the same device.
Figure 2 shows a transceiver in which the present invention can be employed.
Figure 3 shows a transmission schedule for an IEEE 802.11 network as compared with Bluetooth HV3 transmissions. The primary purpose of this figure is to demonstrate use of CTS frames to set the NAV.
Figure 4 shows a transmission schedule for beacons in an IEEE 802.11 network as compared with Bluetooth sniff instants. The primary purpose of this figure is to demonstrate use of Quiet elements to set the NAV.
Figure 5 shows a transmission schedule for beacons in an IEEE 802.11 network as compared with Bluetooth bulk data transmissions. In particular, it shows an AP configured with a DTIM Period of 3. The primary purpose of this figure is to demonstrate use of Contention-Free Periods at a PCF to set the NAV.

### DESCRIPTION OF THE INVENTION

An aspect of the invention improves coexistence between an IEEE 802.11 transceiver (including IEEE 802.11 b, 802.11 g and 802.11 n) operating as an access point (AP) and a collocated Bluetooth transceiver. It achieves this by influencing when other IEEE 802.11 transceivers that are associated with the AP attempt to transmit, such that those transmissions (and any required responses) are less likely to coincide with Bluetooth traffic.

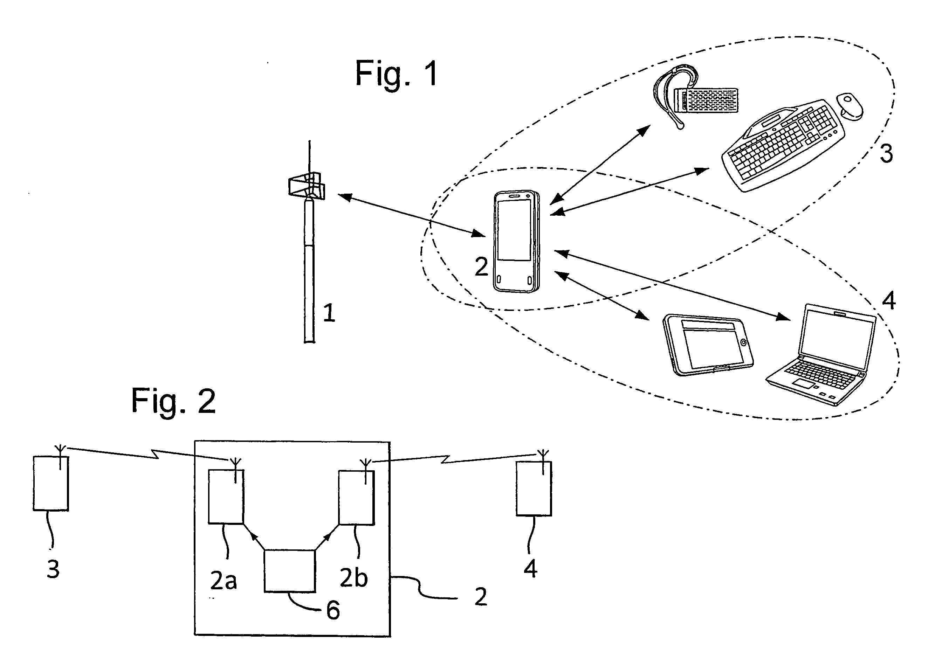

As shown in Figure 1, an aspect of the invention enables a device 2 having a 2.4GHz IEEE 802.11 transceiver operating as an AP to coexist with a collocated Bluetooth transceiver, with better performance than would be possible using just a Packet Traffic Arbitration (PTA) approach. Device 2 communicates with devices 3 using the Bluetooth protocol and with devices 4 using the IEEE 802.11 protocol. The device may also communicate with a base station 1 using a cellular networking protocol. In this aspect, the methods used are interoperable with existing IEEE 802.11 implementations. In a typical implementation of this aspect of the invention, no changes are required to the non-collocated IEEE 802.11 and Bluetooth transceiver devices operating in the same networks. Some aspects of the invention require the use of certain optional features within the IEEE 802.11 protocol in order to achieve enhanced performance. Other aspects of the invention use the mandatory features of the IEEE 802.11 protocol.

In the main embodiment, IEEE 802.11 devices in the BSS are prevented from transmitting to the AP during periods of critical Bluetooth activity. Preferably, the AP's IEEE 802.11 transceiver can be switched off during those periods, thereby reducing power consumption. Alternatively, these periods could be used for activity that would not interfere with Bluetooth operation, such as calibration of the transceiver or operation in a different BSS operating on another band.

While the NAV is intended for use in medium reservation for operation of an IEEE 802.11 transceiver, an aspect of the invention pertains to the use of the NAV to protect operation of a Bluetooth transceiver. 'Setting the NAV' is defined as: Using the functionality provided by the IEEE 802.11 protocol, the AP makes a transmission to the wireless network which results in the NAV of each client device being set to inhibit transmission of the client device during a period set by the AP. According to one embodiment of the present invention, the AP device sets the NAV at all devices in the Basic Service Set (BSS) to cover times when protected Bluetooth activity is expected. This allows the Bluetooth transceiver collocated on the AP device to perform transmission and reception of Bluetooth traffic during the periods set by the AP without interference from either the IEEE 802.11 transceiver located on the AP or any other IEEE 802.11 transceivers using the same channel.

An aspect of the present invention describes a communication device which is configured to communicate with a first wireless network, such as a Bluetooth network, and a second wireless network, such as an IEEE 802.11 network. The communication device is configured to transmit a signal according to the protocol of the second network so as to indicate to devices on the second network that they should not transmit during a specific period of time, and subsequently, transmit or receive traffic to/from the first network during the specific period of time. A preferred aspect of the invention is used in conjunction with a mechanism to restrict most Bluetooth activity to occur within the protected periods, by use of packet traffic arbitration or higher-layer protocol methods.

### Description of Apparatus

Figure 2 shows an embodiment of a device implementing the present invention, comprising a transceiver 2a for communicating with a device 3 on a network operating according to a first protocol and a transceiver 2b for communicating with a device 4 on a network operating according to a second protocol. In this embodiment, the first protocol is Bluetooth and the second protocol is IEEE 802.11, whilst the transceiver 2b is an Access Point for an IEEE 802.11 network. The transceiver 2a and the transceiver 2b are collocated in a device 2. In this embodiment, each of transceiver 2a and 2b has an antenna. In alternative embodiments, transceiver 2a and 2b share a common antenna. In this embodiment, transceiver 2a and 2b are distinct hardware components, each being configured to operate according to a particular protocol. In alternative embodiments, the system comprises a single transceiver, capable of transmitting and receiving according to a plurality of protocols. An example of such a transceiver may include an entirely digital transceiver. In some of these embodiments, the protocol used can be selected according to an operating mode of the transceiver.

Device 2 comprises control logic 6. Control logic 6 is able to send and receive signals to both of transceiver 2a and 2b. In this embodiment, control logic 6 is configured to receive an indication from transceiver 2a as to when transceiver 2a intends to send or receive a signal according to the first protocol. The signal may be a one off imminent or future signal, or a periodic signal. In response to such an indication, control logic 6 is configured to control transceiver 2b to transmit a signal according to the second protocol so as to indicate to devices on the second network that they should not transmit during the period of time that transceiver 2a has indicated it intends to send or receive a signal according to the first protocol. In this embodiment, the signal comprises the means for setting the NAV of each of the other devices on the second network. Transceiver 2a is configured to subsequently transmit or receive traffic according to the first protocol during the indicated period of time.

In an alternative embodiment of the invention, control logic 6 is configured to use knowledge of NAV protection periods (especially for protection periods such as contention-free periods that have little scheduling flexibility) to control the use of transceiver 2a. In a preferred aspect, transceiver 2a would be controlled to transmit and/or receive during NAV protection periods and deny most activity at other times. This may be implemented according to PTA rules. Alternatively, in an embodiment using a Bluetooth transceiver for transceiver 2a, the parameters of the Bluetooth low power modes in the Bluetooth transceiver may be adjusted to synchronise activity with traffic on the second network appropriately. The controller could select or modify the Bluetooth Sniff/Park schedule parameters to coincide with the periods of IEEE 802.11 NAV protection, or, if the Sniff/Park low power modes are not being used, the controller could invoke Hold during the times between NAV protection.

There are three features in the IEEE 802.11 protocol that are of particular use for setting the NAV for the purpose of coexistence with a Bluetooth transceiver: Duration field in packet headers, Quiet Intervals and Point Coordination Function (PCF). These are discussed in turn.

### Duration Field

All IEEE 802.11 frames contain a Duration/ID field in their headers. This field usually contains a Duration value (only Power-Save Poll (PS-Poll) frames and frames within the Contention-Free Period (CFP) do not contain a duration value). All devices that receive such frames, other than the indicated receiver, are required by the IEEE 802.11 standard to update their NAV to prevent transmissions for the specified duration, thereby implementing a virtual carrier sense mechanism. This is normally used to protect an ongoing frame exchange sequence. In an embodiment of the present invention, the duration field is used to allow coexistence of IEEE 802.11 and Bluetooth. The AP can transmit a suitable frame containing a duration value immediately prior to the start of a transmission or reception by the Bluetooth transceiver, thereby reserving the NAV for the duration to be protected (up to 32.767ms).

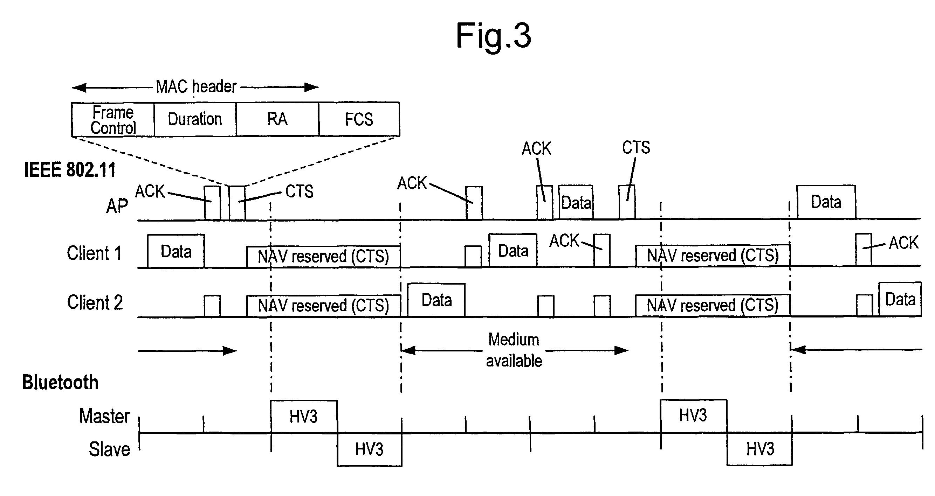

Almost any legal frame type can be used to set the NAV. Figure 3 shows an embodiment of the invention in which a clear-to-send (CTS) frame addressed to the AP (a 'CTS-to-self for short) is used. The AP sends the CTS frame containing a suitable duration value. The NAV is then set on client 1 and client 2, to prevent them from transmitting during the period defined by the duration value. The NAV reservation protects IEEE 802.11 traffic by deferring it until after the Bluetooth activity; protection of the Bluetooth traffic is a secondary effect. The Bluetooth transceiver then transmits and receives during the protected period of time. The use of a `CTS-to-self' is advantageous as its sole purpose is to set the NAV to protect other traffic. Alternatively, a CTS frame addressed to a non-existent node in the network can be sent by the AP, in which the duration field can be set. In another embodiment, a Beacon frame is used by the AP. As with the CTS frame, the duration field is populated with a value to set the NAV. As many IEEE 802.11 devices wake just to receive Beacon frames, the beacon frame is more likely to be seen by devices in power-save.

The frame will generally need to contend for access to the medium so there may be some delay in its transmission. Therefore, in one embodiment where a non-beacon frame is used, the non-beacon frame containing the duration value is scheduled for transmission in advance of the time in which the Bluetooth traffic needs to be protected.

The use of the Duration field to set the NAV is advantageous as it is a mandatory part of the IEEE 802.11 standard, so can be assumed to be supported by all IEEE 802.11 implementations. This mechanism is therefore universally applicable, and so provides a backup for the other more advanced approaches. Its weakness is that the other devices must receive the frame used to set the NAV, i.e. they must have their receiver enabled when it is sent. This may not necessarily be the case for a device implementing power-save.

### Quiet Intervals

IEEE 802.11 h introduced the concept of quiet intervals. These are used to give the AP quiet periods where it can attempt to detect presence of radar. If radar is detected then operations on that channel must cease. The AP can include a Quiet element indication within its Beacon and Probe Response frames announcing a schedule of when quiet intervals will occur; these may be one-off events or recur periodically at multiples of the beacon interval. Each device within the BSS is required to set its NAV at the start of each quiet interval to prevent transmissions until the end of the quiet interval.

Quiet intervals are not intended to directly reduce interference when operating in the presence of radar; rather they are intended to give the AP quiet periods where it can attempt to detect presence of radar. If radar is detected then operations on that channel must cease. Quiet intervals were originally added for use only on certain 5GHz bands that may also be used by radar. They were not intended for use in the 2.4GHz band, but it is possible to do so.

The timing of quiet intervals is specified relative to TBTT with an offset and duration specified in Time Units (TUs), which makes them unsuitable for protecting IEEE 802.11 traffic against frequent short activity such as Bluetooth voice links. The shortest interval that comprises integral numbers of both Bluetooth slots (each 625µs) and TUs (1024µs) is 0.64 seconds, so the IEEE 802.11 beacon interval would ideally be selected as an exact divisor of this to enable periodic activity to be accurately specified. In the case of an HV3 SCO link the shortest repeat time would then be 1.92 seconds, requiring 512 separate Quiet elements, with half of the gaps between quiet intervals lasting just 1TU. This would result in a Beacon frame being longer than the maximum allowed MAC Protocol Data Unit (MPDU) and restrict IEEE 802.11 operation to less than 41% of the time despite nearly 67% being unused by the HV3 link.

The Bluetooth clock will inevitably drift with respect to the IEEE 802.11 Timing Synchronization Function (TSF) so the schedule of quiet intervals will also need to be revised regularly; a 250ppm difference in clock frequencies would result in a 1TU shift in just 4 seconds. In one embodiment of the invention, a deliberate error may be introduced into either the TSF or Bluetooth clock accuracy such that they track each other.

For these reasons, the quiet interval approach is preferably used to protect Bluetooth traffic such as Bluetooth sniff instants or scanning which typically occur less frequently and for longer durations. In an aspect of the invention, the quiet interval to cover these activities is set to be slightly longer than the actual duration of the Bluetooth activity to allow for the inevitable timing errors.

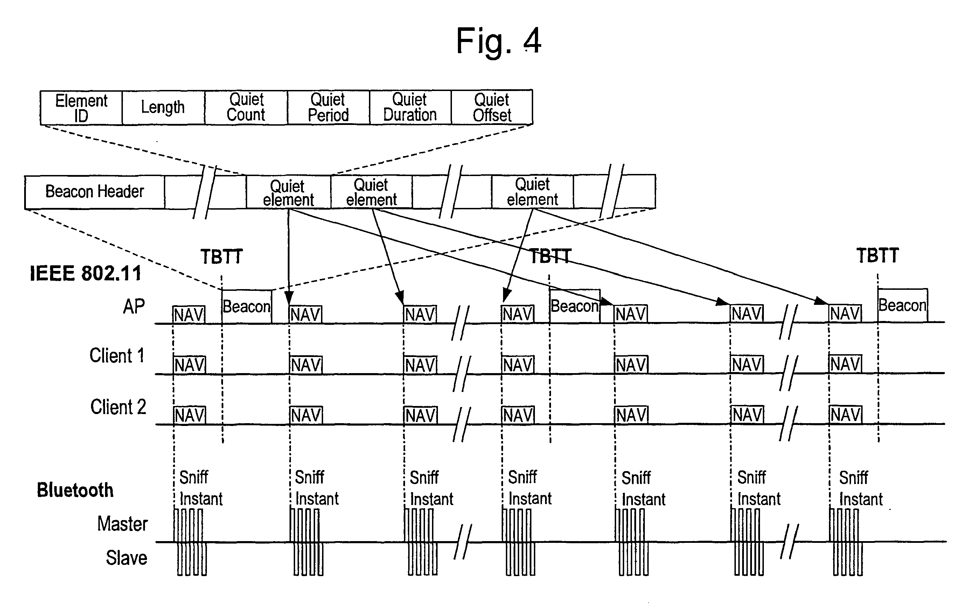

In one embodiment of the invention, the AP can schedule quiet intervals to prevent interference with any Bluetooth activity that is known about sufficiently in advance. Figure 4 shows one embodiment of the invention in which the AP schedules quiet intervals to protect the activity of a collocated Bluetooth transceiver that is in the sniff low power mode. The AP includes one or more Quiet elements in periodically transmitted Beacon frames which define the quiet intervals at suitable offsets from the Target Beacon Transmission Time (TBTT) such that Clients 1 and 2 each set their NAV to prevent them from transmitting during the period of Bluetooth sniff activity.

Support for quiet intervals is currently relatively rare and so this approach should preferably be used in conjunction with the Duration field approach described above. Advantageously, the notification of the schedule in Beacon frames ensures that all devices in the BSS know about it, even those using power-save. To minimise the effect of missed Beacon frames, the schedule can be advertised in advance of an entire beacon period.

### Point Coordination Function

Point Coordination Function (PCF) was a feature in the original IEEE 802.11 standard intended to support a period of contention-free operation following specified Delivery Traffic Indication Message (DTIM) Beacons. It is not widely supported, but all IEEE 802.11 devices are still required to respect the contention-free period (CFP) part of the IEEE 802.11 protocol. Details of the CFP are advertised using a contention-free (CF) Parameter Set element in Beacon and Probe Response frames. At the start of the CFP, all non-AP devices in the BSS are required to set their NAV to protect the maximum duration of the CFP (which may be longer than the beacon interval). In one embodiment of the present invention, this feature may be used by the AP to allow a period of exclusive Bluetooth operation. This can be used as an alternative to the above implementations, which require the Bluetooth component within the AP to provide an indication of when it wishes to transmit or receive. In this embodiment, the AP can simply confine Bluetooth access largely to the CFP period.

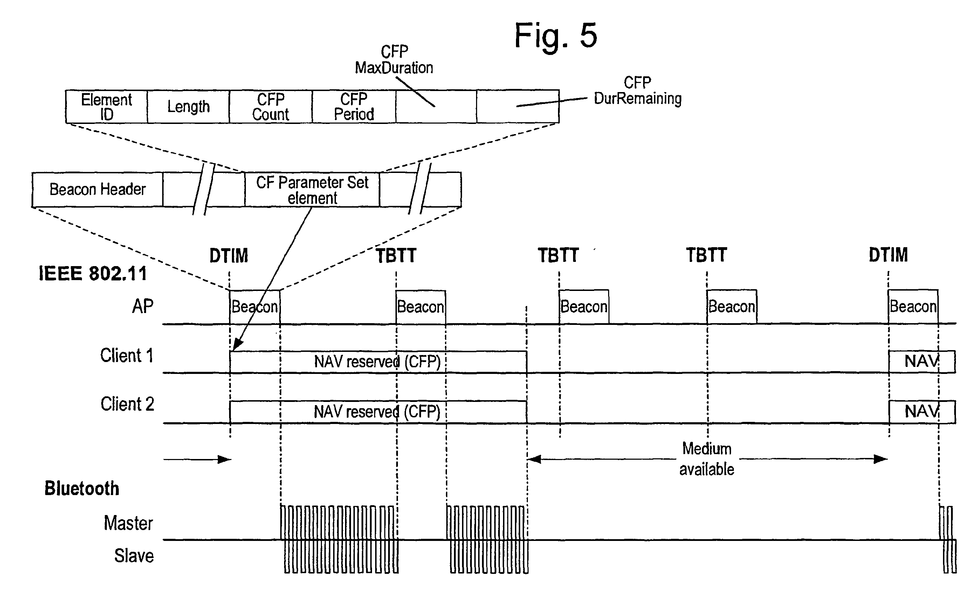

Figure 5 shows an embodiment of the invention in which CFPs are designated by a DTIM Target Beacon Transmission Time (TBTT). The AP periodically sends a Beacon frame defining a CFP for protecting the IEEE 802.11 traffic from the Bluetooth traffic. The NAV is then set on client 1 and client 2, to prevent them from transmitting during the period. The Bluetooth transceiver then transmits and receives bulk traffic during the protected period of time.

A maximum of one CFP exists each DTIM, so this provides a very coarse scheduling mechanism between Bluetooth and IEEE 802.11. It is clearly not suitable for supporting low latency transfers over either transceiver, but it provides an efficient approach for sharing the medium for bulk data transfer such as file downloads.

### Combinational Use

An access point providing coexistence between a collocated IEEE 802.11 transceiver and a Bluetooth transceiver according to an embodiment of the present invention should preferably:
- Include a CF Parameter Set element in Beacon and Probe Response frames to create a periodic CFP if bulk data transfer over Bluetooth will be attempted and there are no latency restrictions on IEEE 802.11 traffic.
- Include Quiet elements in Beacon and Probe Response frames to protect Bluetooth activity that can be predicted sufficiently far in advance, such as sniff instants and page/inquiry scanning. For periodic quiet intervals the schedule should be revised as necessary to track drift between the Bluetooth clock and IEEE 802.11 TSF.
- Transmit frames prior to all predicted Bluetooth activity, with the Duration field set to protect until the expected end of that activity. This should be done for all activity, including those already indicated by either a CF Parameter Set element or Quiet element, since not all devices will support the other mechanisms. A CTS-to-self frame should usually be used for this, but for a protection period starting immediately after a TBTT the Beacon frame can be used instead.

Any of these techniques may be used on their own, but the best results will be achieved by their combination.

In one embodiment of the invention, PTA techniques will also be used to handle the cases where Bluetooth attempts to operate without first protecting the activity via the IEEE 802.11 NAV, such as for non-periodic Bluetooth activity. E.g. Data transfer when not using sniff. Furthermore, the arbitration mechanism may also be used to complement the above techniques - preventing inappropriate transmissions by the AP during the protected periods. The AP will not automatically set its own NAV as a consequence of transmitting frames (other than for the Quiet interval), which is why the PTA techniques may be useful to prevent its transmissions. In alternative embodiments, the AP sets its own NAV to prevent collisions, or switches its transceiver off completely during the protected periods.

In alternative embodiments, the present coexistence techniques can be applied to IEEE 802:11 transceivers that are collocated with technologies other than Bluetooth, where one or both transceivers suffer interference from the other's operation. This may either be due to an inability to sufficiently block the other transceiver's transmissions or to limitations of the implementation that otherwise prevent simultaneous operation. The latter would typically be the case where components are shared between the transceivers, such as an antenna that is switched between them or use of a software defined transceiver architecture than can only support one protocol at a time.

In a further alternative embodiment, the present coexistence techniques can also be applied in Independent Basic Service Set (IBSS) ad-hoc networks, with some restrictions: quiet intervals are specified by the device creating the IBSS and cannot be subsequently changed, transmission of Beacon frames is pseudo-randomly distributed between devices, and CTS frames cannot be sent in the ATIM windows that follow every Beacon. However, the advantages described above with respect to coexistence techniques for an Infrastructure network substantially still apply when these techniques are applied for ad-hoc networks. In particular, Figure 3 is equally applicable to the IBSS scenario where the AP device is now an IBSS STA with a collocated Bluetooth transceiver, and Clients 1 and 2 are other members of the IBSS.

Aspects of the invention may also be used for improving coexistence of multiple wireless protocol transceivers on distinct but substantially collocated devices (i.e. devices within sufficient range to cause mutual interference when transmitting on the same frequency bands that have an alternate communications path such as Ethernet). For example, where a non-AP device is connected to both an IEEE 802.11 network and a Bluetooth network, some of the above techniques may be used. Where the non-AP device wishes to prevent some IEEE 802.11 traffic when it is scheduled to transmit or receive Bluetooth traffic, it may send the Bluetooth scheduling information to the AP device. The AP can use this scheduling information to set the NAV's of the BSS according to the above techniques, thereby preventing some mutual interference between the IEEE 802.11 traffic and the Bluetooth traffic.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. The applicant indicates that aspects of the present invention may consist of any such individual feature or combination of features. In view of the foregoing description it will be evident to a person skilled in the art that various modifications may be made within the scope of the invention as defined by the claims.

## Claims

1. A communication device (2) configured to communicate with a first wireless network by means of a first protocol and communicate with a second wireless network by means of a second protocol, the second protocol specifying that, in response to a signal of a pre-defined format, a device on the second network should not transmit on the second network for at least one period of time,
the communication device being configured to:
transmit a signal according to the second protocol so as to indicate to devices on the second network that they should not transmit during a first period of time, and subsequent to the above transmitting step, transmit or receive signals by means of the first protocol during the first period of time, wherein
the communication device is **characterised in that** it is configured to use the following criteria to determine the signal used to indicate to devices on the second network that they should not transmit during a first at least one period of time:
(i) when the signal transmitted by means of the first protocol is due to begin imminently, the step of transmitting a signal according to the second protocol so as to indicate to devices on the second network that they should not transmit during a first period of time comprises sending to the devices, immediately prior to the start of the communication between the communication device and the first wireless network, a frame indicating the period of time that the communication device will be communicating with the first wireless network;
(ii) when the signal transmitted by means of the first protocol is known in advance the step of transmitting a signal according to the second protocol so as to indicate to devices on the second network that they should not transmit during a first period of time comprises sending, to the devices, a frame containing an indication of at least one period of time during which the communication device may be communicating with the first wireless network; and
(iii) when the signal transmitted by means of the first protocol comprises a bulk data transfer and there are no latency restrictions on the second network, the step of signalling devices on the second network to indicate that they should not transmit during a first period of time comprises sending, to the devices, a frame containing an indication of a period of time immediately following the frame during which the communication device may be communicating with the first wireless network.

2. The communication device of claim 1 wherein the first and second protocols are such that communications using the first and second protocols are mutually interfering;

3. The communication device of any preceding claim wherein the first and second wireless networks occupy an overlapping frequency bandwidth.

4. The communication device of any preceding claim wherein the first network is a Bluetooth wireless network.

5. The communication device of any preceding claim wherein the second network is an IEEE 802.11 wireless network.

6. The communication device of claim 5, wherein the second network is an infrastructure mode network and the communication device is an infrastructure mode network Access Point according to the IEEE 802.11 protocol.

7. The communication device of any preceding claim wherein the step of transmitting a signal according to the second protocol so as to indicate to devices on the second network that they should not transmit during a first period of time is made upon determination that the communication device will be communicating with the first network.

8. The communication device of any preceding claim wherein the frame of claim 1(i) identifies a device on the second network permitted to transmit on the second network during the first period of time according to the second protocol.

9. The communication device of claim 8 wherein the frame of claim 1 (i) identifies the communication device as the device permitted to transmit on the second network during the first period of time.

10. The communication device of claim 8 wherein the frame of claim 1 (i) identifies a device not connected to the second network as the device permitted to transmit on the second network during the first period of time.

11. The communication device of any of claims 8-10 wherein the frame of claim 1 (i) is a Clear To Send (CTS) frame as defined by the IEEE 802.11 protocol.

12. The communication device of any preceding claim wherein the frame of claim 1 (ii) is a periodically transmitted frame.

13. The communication device of claim 12 wherein the frame of claim 1 (ii) is a Beacon or Probe Response frame as defined by the IEEE 802.11 protocol.

14. The communication device of claim 13 wherein the indication of at least one period of time as contained in the Beacon frame or Probe Response frame is a Quiet element as defined in the IEEE 802.11 protocol.

15. The communication device of any preceding claim wherein the frame of claim 1 (iii) is a periodically transmitted frame.

16. The communication device of claim 15 wherein the frame of claim 1 (iii) is a Beacon as defined by the IEEE 802.11 protocol.

17. The communication device of claim 16 wherein the indication of at least one period of time as contained in the Beacon frame is a CF Parameter Set information element as defined in the IEEE 802.11 protocol.

18. The communication device of any preceding claim, wherein the communication device comprises a radio antenna configured to be used to send and receive signals according to the first or second protocol.

19. The communication device of claim 18, wherein the communication device is configured to use the antenna for transmission or reception of signals by means of the first protocol only during the first period of time.

20. The communication device of any preceding claim, wherein the communication device comprises at least one shared transceiver resource used by the communication device when transmitting signals according to the first or second protocol, wherein the shared transceiver resources can only be used by the communication device to transmit a signal according to only either the first or the second protocol at a time.

21. The communication device of claim 1, wherein signals transmitted according to the first protocol interfere with simultaneous transmissions or reception according to the second protocol.

22. The communication device of claim 1, wherein signals transmitted according to the second protocol interfere with simultaneous transmissions or reception according to the first protocol.

23. The communication device of claim 7 as dependent on claim 6, wherein the step of transmitting a signal according to the second protocol so as to indicate to devices on the second network that they should not transmit during a first period of time results in the NAV of each device on the second network being set to specify that the device should not transmit during the first period of time.

24. The communication device of any preceding claim, wherein the communication device is configured to transmit or receive signals by means of the first protocol only during the first period of time.

25. The communication device of claim 1, wherein the first period of time may comprise a plurality of periods of time.

26. A method of communicating with a first wireless network by means of a first protocol and communicating with a second wireless network by means of a second protocol, the second protocol specifying that, in response to a signal of a pre-defined format, a device on the second network should not transmit on the second network for at least one period of time, the method comprising the steps of:
transmitting a signal according to the second protocol so as to indicate to devices on the second network that they should not transmit during a first period of time, and
subsequent to the above transmitting step, transmit or receive signals by means of the first protocol during the first period of time,
the method being **characterised in that** the following criteria are used to determine the signal used to indicate to devices on the second network that they should not transmit during a first at least one period of time:
(i) when the signal transmitted by means of the first protocol is due to begin imminently, the step of transmitting a signal according to the second protocol so as to indicate to devices on the second network that they should not transmit during a first period of time comprises sending to the devices, immediately prior to the start of the communication between the communication device and the first wireless network, a frame indicating the period of time that the communication device will be communicating with the first wireless network;
(ii) when the signal transmitted by means of the first protocol is known in advance the step of transmitting a signal according to the second protocol so as to indicate to devices on the second network that they should not transmit during a first period of time comprises sending, to the devices, a frame containing an indication of at least one period of time during which the communication device may be communicating with the first wireless network; and
(iii) when the signal transmitted by means of the first protocol comprises a bulk data transfer and there are no latency restrictions on the second network, the step of signalling devices on the second network to indicate that they should not transmit during a first period of time comprises sending, to the devices, a frame containing an indication of a period of time immediately following the frame during which the communication device may be communicating with the first wireless network.

## Patentansprüche

1. Kommunikationsvorrichtung (2), die ausgelegt ist, mit einem ersten drahtlosen Netzwerk mittels eines ersten Protokolls zu kommunizieren und mit einem zweiten drahtlosen Netzwerk mittels eines zweiten Protokolls zu kommunizieren, wobei das zweite Protokoll spezifiziert, dass eine Vorrichtung in dem zweiten Netzwerk als Antwort auf ein Signal eines vordefinierten Formats für mindestens eine Zeitdauer nicht über das zweite Netzwerk übertragen sollte,
wobei die Kommunikationsvorrichtung ausgelegt ist,
ein Signal entsprechend dem zweiten Protokoll zu übertragen, um den Vorrichtungen in dem zweiten Netzwerk anzugeben, dass diese während einer ersten Zeitdauer nicht übertragen sollten, und anschließend an den obigen Übertragungsschritt Signale mittels des ersten Protokolls während der ersten Zeitdauer zu übertragen oder zu empfangen, wobei
die Kommunikationsvorrichtung **dadurch gekennzeichnet ist, dass** sie ausgelegt ist, die folgenden Kriterien zu verwenden, um das Signal zu bestimmen, das verwendet wird, um den Vorrichtungen in dem zweiten Netzwerk anzugeben, dass diese während mindestens einer ersten Zeitdauer nicht übertragen sollten:
(i) wenn das Signal, das mittels des ersten Protokolls übertragen wird, unmittelbar zu beginnen hat, weist der Schritt des Übertragens eines Signals entsprechend dem zweiten Protokoll, um den Vorrichtungen in dem zweiten Netzwerk anzugeben, dass diese während einer ersten Zeitdauer nicht übertragen sollten, ein Senden eines Rahmens, der die Zeitdauer angibt, während der die Kommunikationsvorrichtung mit dem ersten drahtlosen Netzwerk kommunizieren wird, an die Vorrichtungen unmittelbar vor dem Start der Kommunikation zwischen der Kommunikationsvorrichtung und dem ersten drahtlosen Netzwerk auf;
(ii) wenn das Signal, das mittels des ersten Protokolls übertragen wird, im Voraus bekannt ist, weist der Schritt des Übertragens eines Signals entsprechend dem zweiten Protokoll, um den Vorrichtungen in dem zweiten Netzwerk anzugeben, dass diese während einer ersten Zeitdauer nicht übertragen sollten, ein Senden eines Rahmens, der eine Angabe mindestens einer Zeitdauer enthält, während derer die Kommunikationsvorrichtung mit dem ersten drahtlosen Netzwerk kommunizieren kann, an die Vorrichtungen auf; und
(iii) wenn das Signal, das mittels des ersten Protokolls übertragen wird, eine Massendatenübertragung aufweist und keine Latenzbeschränkungen in dem zweiten Netzwerk vorhanden sind, weist der Schritt eines Signalisierens an die Vorrichtungen in dem zweiten Netzwerk, um anzugeben, dass diese während einer ersten Zeitdauer nicht übertragen sollten, ein Senden eines Rahmens, der eine Angabe einer Zeitdauer unmittelbar folgend an den Rahmen, während dem die Kommunikationsvorrichtung mit dem ersten drahtlosen Netzwerk kommunizieren kann, enthält, an die Vorrichtungen auf.

2. Kommunikationsvorrichtung nach Anspruch 1, wobei die ersten und zweiten Protokolle derart ausgebildet sind, dass sich Kommunikationen unter Verwendung der ersten und zweiten Protokolle gegenseitig stören.

3. Kommunikationsvorrichtung nach einem der vorhergehenden Ansprüche, wobei die ersten und zweiten drahtlosen Netzwerke eine überdeckende Frequenzbandbreite belegen.

4. Kommunikationsvorrichtung nach einem der vorhergehenden Ansprüche, wobei das erste Netzwerk ein drahtloses Bluetooth-Netzwerk ist.

5. Kommunikationsvorrichtung nach einem der vorhergehenden Ansprüche, wobei das zweite Netzwerk ein drahtloses IEEE 802.11-Netzwerk ist.

6. Kommunikationsvorrichtung nach Anspruch 5, wobei das zweite Netzwerk ein Infrastrukturmodusnetzwerk ist und die Kommunikationsvorrichtung ein Infrastrukturmodusnetzwerk-Zugangspunkt entsprechend dem IEEE 802.11-Protokoll ist.

7. Kommunikationsvorrichtung nach einem der vorhergehenden Ansprüche, wobei der Schritt des Übertragens eines Signals entsprechend dem zweiten Protokoll, um den Vorrichtungen in dem zweiten Netzwerk anzugeben, dass diese während einer ersten Zeitdauer nicht übertragen sollten, auf eine Bestimmung hin durchgeführt wird, dass die Kommunikationsvorrichtung mit dem ersten Netzwerk kommunizieren wird.

8. Kommunikationsvorrichtung nach einem der vorhergehenden Ansprüche, wobei der Rahmen nach Anspruch 1(i) eine Vorrichtung in dem zweiten Netzwerk identifiziert, der es erlaubt ist, während der ersten Zeitdauer über das zweite Netzwerk entsprechend dem zweiten Protokoll zu übertragen.

9. Kommunikationsvorrichtung nach Anspruch 8, wobei der Rahmen nach Anspruch 1(i) die Kommunikationsvorrichtung als die Vorrichtung identifiziert, der es erlaubt ist, während der ersten Zeitdauer über das zweite Netzwerk zu übertragen.

10. Kommunikationsvorrichtung nach Anspruch 8, wobei der Rahmen nach Anspruch 1(i) eine Vorrichtung, die nicht mit dem zweiten Netzwerk verbunden ist, als die Vorrichtung identifiziert, der es erlaubt ist, während der ersten Zeitdauer über das zweite Netzwerk zu übertragen.

11. Kommunikationsvorrichtung nach einem der Ansprüche 8 bis 10, wobei der Rahmen nach Anspruch 1(i) ein Clear-To-Send(CTS)-Rahmen gemäß dem IEEE 802.11-Protokoll ist.

12. Kommunikationsvorrichtung nach einem der vorhergehenden Ansprüche, wobei der Rahmen nach Anspruch 1 (ii) ein periodisch übertragener Rahmen ist.

13. Kommunikationsvorrichtung nach Anspruch 12, wobei der Rahmen nach Anspruch 1 (ii) ein Beacon- oder Probe-Response-Rahmen gemäß dem IEEE 802.11-Protokoll ist.

14. Kommunikationsvorrichtung nach Anspruch 13, wobei die Angabe mindestens einer Zeitdauer, wie sie in dem Beacon-Rahmen oder dem Probe-Response-Rahmen enthalten ist, ein Quiet-Element gemäß dem IEEE 802.11-Protokoll ist.

15. Kommunikationsvorrichtung nach einem der vorhergehenden Ansprüche, wobei der Rahmen nach Anspruch 1 (iii) ein periodisch übertragener Rahmen ist.

16. Kommunikationsvorrichtung nach Anspruch 15, wobei der Rahmen nach Anspruch 1 (iii) ein Beacon, wie es in dem IEEE 802.11-Protokoll definiert ist, ist.

17. Kommunikationsvorrichtung nach Anspruch 16, wobei die Angabe mindestens einer Zeitdauer, wie sie in dem Beacon-Rahmen enthalten ist, ein CF-Parameter-Set-Informationselement, wie es in dem IEEE 802.11-Protokoll definiert ist, ist.

18. Kommunikationsvorrichtung nach einem der vorhergehenden Ansprüche, wobei die Kommunikationsvorrichtung eine Funkantenne aufweist, die ausgelegt ist, für ein Senden und Empfangen von Signalen entsprechend dem ersten oder zweiten Protokoll verwendet zu werden.

19. Kommunikationsvorrichtung nach Anspruch 18, wobei die Kommunikationsvorrichtung ausgelegt ist, die Antenne zum Übertragen oder Empfangen von Signalen mittels des ersten Protokolls nur während der ersten Zeitdauer zu verwenden.

20. Kommunikationsvorrichtung nach einem der vorhergehenden Ansprüche, wobei die Kommunikationsvorrichtung mindestens eine gemeinsame Transceiver-Quelle aufweist, die von der Kommunikationsvorrichtung verwendet wird, wenn Signale entsprechend dem ersten oder zweiten Protokoll übertragen werden, wobei die gemeinsamen Transceiver-Quellen nur von der Kommunikationsvorrichtung verwendet werden, um ein Signal entsprechend entweder dem ersten oder dem zweiten Protokoll zu einem Zeitpunkt zu übertragen.

21. Kommunikationsvorrichtung nach Anspruch 1, wobei Signale, die entsprechend dem ersten Protokoll übertragen werden, gleichzeitige Übertragungen oder einen Empfang entsprechend dem zweiten Protokoll stören.

22. Kommunikationsvorrichtung nach Anspruch 1, wobei Signale, die entsprechend dem zweiten Protokoll übertragen werden, gleichzeitige Übertragungen oder einen Empfang entsprechend dem ersten Protokoll stören.

23. Kommunikationsvorrichtung nach Anspruch 7 und Anspruch 6, wobei der Schritt des Übertragens eines Signals entsprechend dem zweiten Protokoll, um den Vorrichtungen in dem zweiten Netzwerk anzugeben, dass diese während der ersten Zeitdauer nicht übertragen sollten, dazu führt, dass das NAV jeder Vorrichtung in dem zweiten Netzwerk festgelegt wird, um zu spezifizieren, dass die Vorrichtung während der ersten Zeitdauer nicht übertragen sollte.

24. Kommunikationsvorrichtung nach einem der vorhergehenden Ansprüche, wobei die Kommunikationsvorrichtung ausgelegt ist, Signale mittels des ersten Protokolls nur während der ersten Zeitdauer zu übertragen oder zu empfangen.

25. Kommunikationsvorrichtung nach Anspruch 1, wobei die erste Zeitdauer mehrere Zeitdauern aufweisen kann.

26. Verfahren zur Kommunikation mit einem ersten drahtlosen Netzwerk mittels eines ersten Protokolls und zur Kommunikation mit einem zweiten drahtlosen Netzwerk mittels eines zweiten Protokolls, wobei das zweite Protokoll spezifiziert, dass eine Vorrichtung in dem zweiten Netzwerk als Antwort auf ein Signal eines vordefinierten Formats während mindestens einer Zeitdauer nicht über das zweite Netzwerk übertragen sollte, wobei das Verfahren die folgenden Schritte aufweist:
Übertragen eines Signals entsprechend dem zweiten Protokoll, um den Vorrichtungen in dem zweiten Netzwerk anzugeben, dass diese während einer ersten Zeitdauer nicht übertragen sollten, und
Übertragen oder Empfangen von Signalen mittels des ersten Protokolls während der ersten Zeitdauer anschließend an den obigen Übertragungsschritt,
wobei das Verfahren **dadurch gekennzeichnet ist, dass** die folgenden Kriterien verwendet werden, um das Signal zu bestimmen, das verwendet wird, um den Vorrichtungen in dem zweiten Netzwerk anzugeben, dass diese während mindestens einer ersten Zeitdauer nicht übertragen sollten:
(i) wenn das Signal, das mittels des ersten Protokolls übertragen wird, unmittelbar zu beginnen hat, weist der Schritt des Übertragens eines Signals entsprechend dem zweiten Protokoll, um den Vorrichtungen in dem zweiten Netzwerk anzugeben, dass diese während einer ersten Zeitdauer nicht übertragen sollten, ein Senden eines Rahmens, der die Zeitdauer angibt, während der die Kommunikationsvorrichtung mit dem ersten drahtlosen Netzwerk kommunizieren wird, an die Vorrichtungen unmittelbar vor dem Start der Kommunikation zwischen der Kommunikationsvorrichtung und dem ersten drahtlosen Netzwerk auf;
(ii) wenn das Signal, das mittels des ersten Protokolls übertragen wird, im Voraus bekannt ist, weist der Schritt des Übertragens eines Signals entsprechend dem zweiten Protokoll, um den Vorrichtungen in dem zweiten Netzwerk anzugeben, dass diese während einer ersten Zeitdauer nicht übertragen sollten, ein Senden eines Rahmens, der eine Angabe mindestens einer Zeitdauer enthält, während derer die Kommunikationsvorrichtung mit dem ersten drahtlosen Netzwerk kommunizieren kann, an die Vorrichtungen auf; und
(iii) wenn das Signal, das mittels des ersten Protokolls übertragen wird, eine Massendatenübertragung aufweist und keine Latenzbeschränkungen in dem zweiten Netzwerk vorhanden sind, der Schritt eines Signalisierens an die Vorrichtungen in dem zweiten Netzwerk, um anzugeben, dass diese während einer ersten Zeitdauer nicht übertragen sollten, ein Senden eines Rahmens, der eine Angabe einer Zeitdauer unmittelbar folgend an den Rahmen, während dem die Kommunikationsvorrichtung mit dem ersten drahtlosen Netzwerk kommunizieren kann, enthält, an die Vorrichtungen auf.

## Revendications

1. Dispositif de communication (2) configuré de manière à communiquer avec un premier réseau sans fil au moyen d'un premier protocole et à communiquer avec un second réseau sans fil au moyen d'un second protocole, le second protocole indiquant que, en réponse à un signal d'un format prédéfini, un dispositif sur le second réseau ne doit pas émettre sur le second réseau au cours d'au moins une période de temps,
le dispositif de communication étant configuré de manière à :
transmettre un signal selon le second protocole, de façon à indiquer à des dispositifs sur le second réseau qu'ils ne doivent pas émettre au cours d'une première période de temps, et subséquemment à l'étape de transmission ci-dessus, à transmettre ou recevoir des signaux au moyen du premier protocole au cours de la première période de temps, dans lequel
le dispositif de communication est **caractérisé en ce qu'**il est configuré de manière à utiliser les critères ci-dessous en vue de déterminer le signal servant à indiquer à des dispositifs sur le second réseau qu'ils ne doivent pas émettre au cours d'au moins une première période de temps :
(i) lorsque le signal émis au moyen du premier protocole est sur le point de débuter, l'étape consistant à émettre un signal selon le second protocole de façon à indiquer à des dispositifs sur le second réseau qu'ils ne doivent pas émettre au cours d'une première période de temps comprend un envoi aux dispositifs, immédiatement avant le début de la communication entre le dispositif de communication et le premier réseau sans fil, d'une trame indiquant la période de temps au cours de laquelle le dispositif de communication sera en communication avec le premier réseau sans fil ;
(ii) lorsque le signal émis au moyen du premier protocole est connu à l'avance, l'étape de transmission d'un signal selon le second protocole de façon à indiquer aux dispositifs sur le second réseau qu'ils ne doivent pas émettre au cours d'une première période de temps, comprend un envoi, aux dispositifs, d'une trame contenant une indication d'au moins une période de temps au cours de laquelle le dispositif de communication peut être en communication avec le premier réseau sans fil ; et
(iii) lorsque le signal émis au moyen du premier protocole comprend un transfert de données en vrac et qu'il n'existe pas de restrictions de temps de latence sur le second réseau, l'étape de signalisation aux dispositifs sur le second réseau visant à indiquer qu'ils ne doivent pas émettre au cours d'une première période de temps, comprend un envoi, aux dispositifs, d'une trame contenant une indication d'une période de temps qui suit immédiatement la trame au cours de laquelle le dispositif de communication peut être en communication avec le premier réseau sans fil.

2. Dispositif de communication selon la revendication 1, dans lequel les premier et second protocoles sont tels que les communications utilisant les premier et second protocoles interfèrent mutuellement.

3. Dispositif de communication selon l'une quelconque des revendications précédentes, dans lequel les premier et second réseaux sans fil occupent une largeur de bande de fréquence en chevauchement.

4. Dispositif de communication selon l'une quelconque des revendications précédentes, dans lequel le premier réseau est un réseau sans fil Bluetooth.

5. Dispositif de communication selon l'une quelconque des revendications précédentes, dans lequel le second réseau est un réseau sans fil IEEE 802.11.

6. Dispositif de communication selon la revendication 5, dans lequel le second réseau est un réseau en mode infrastructure et le dispositif de communication est un point d'accès de réseau en mode infrastructure selon le protocole IEEE 802.11.

7. Dispositif de communication selon l'une quelconque des revendications précédentes, dans lequel l'étape d'émission d'un signal selon le second protocole visant à indiquer aux dispositifs sur le second réseau qu'ils ne doivent pas émettre au cours d'une première période de temps est mise en oeuvre lorsqu'il est déterminé que le dispositif de communication sera en communication avec le premier réseau.

8. Dispositif de communication selon l'une quelconque des revendications précédentes, dans lequel la trame selon la revendication 1 (i) identifie un dispositif sur le second réseau, autorisé à émettre sur le second réseau au cours de la première période de temps selon le second protocole.

9. Dispositif de communication selon la revendication 8, dans lequel la trame selon la revendication 1(i) identifie le dispositif de communication comme étant le dispositif autorisé à émettre sur le second réseau au cours de la première période de temps.

10. Dispositif de communication selon la revendication 8, dans lequel la trame selon la revendication 1(i) identifie un dispositif non connecté au second réseau comme étant le dispositif autorisé à émettre sur le second réseau au cours de la première période de temps.

11. Dispositif de communication selon l'une quelconque des revendications 8 à 10, dans lequel la trame selon la revendication 1 (i) est une trame « prêt à émettre » (CTS) telle que définie par le protocole IEEE 802.11.

12. Dispositif de communication selon l'une quelconque des revendications précédentes, dans lequel la trame selon la revendication 1(ii) est une trame émise périodiquement.

13. Dispositif de communication selon la revendication 12, dans lequel la trame selon la revendication 1(ii) est une trame de balise ou une trame de réponse de sondage telle que définie par le protocole IEEE 802.11.

14. Dispositif de communication selon la revendication 13, dans lequel l'indication d'au moins une période de temps telle que contenue dans la trame de balise ou la trame de réponse de sondage est un élément de silence tel que défini dans le protocole IEEE 802.11.

15. Dispositif de communication selon l'une quelconque des revendications précédentes, dans lequel la trame selon la revendication 1(iii) est une trame émise périodiquement.

16. Dispositif de communication selon la revendication 15, dans lequel la trame selon la revendication 1(iii) est une balise telle que définie par le protocole IEEE 802.11.

17. Dispositif de communication selon la revendication 16, dans lequel l'indication d'au moins une période de temps telle que contenue dans la trame de balise est un élément d'information d'ensemble de paramètres CF tel que défini dans le protocole IEEE 802.11.

18. Dispositif de communication selon l'une quelconque des revendications précédentes, dans lequel le dispositif de communication comprend une antenne radio configurée de manière à être utilisée en vue d'envoyer et de recevoir des signaux selon le premier ou le second protocole.

19. Dispositif de communication selon la revendication 18, dans lequel le dispositif de communication est configuré de manière à utiliser l'antenne pour l'émission ou la réception de signaux au moyen du premier protocole uniquement au cours de la première période de temps.

20. Dispositif de communication selon l'une quelconque des revendications précédentes, dans lequel le dispositif de communication comprend au moins une ressource d'émetteur-récepteur partagée utilisée par le dispositif de communication lors de l'émission de signaux selon le premier ou le second protocole, dans lequel les ressources d'émetteur-récepteur partagées ne peuvent être utilisées par le dispositif de communication que pour émettre un signal selon le premier ou le second protocole à un même instant.

21. Dispositif de communication selon la revendication 1, dans lequel les signaux émis selon le premier protocole interfèrent avec des émissions ou réceptions simultanées selon le second protocole.

22. Dispositif de communication selon la revendication 1, dans lequel les signaux émis selon le second protocole interfèrent avec des émissions ou réceptions simultanées selon le premier protocole.

23. Dispositif de communication selon la revendication 7 lorsqu'elle dépend de la revendication 6, dans lequel l'étape d'émission d'un signal selon le second protocole de manière à indiquer à des dispositifs sur le second réseau qu'ils ne doivent pas émettre au cours d'une première période de temps se traduit par le fait que le support d'applications réseau, NAV, de chaque dispositif sur le second réseau est défini de manière à indiquer que le dispositif ne doit pas émettre au cours de la première période de temps.

24. Dispositif de communication selon l'une quelconque des revendications précédentes, dans lequel le dispositif de communication est configuré de manière à émettre ou recevoir des signaux au moyen du premier protocole uniquement au cours de la première période de temps.

25. Dispositif de communication selon la revendication 1, dans lequel la première période de temps peut comporter une pluralité de périodes de temps.

26. Procédé pour communiquer avec un premier réseau sans fil au moyen d'un premier protocole et pour communiquer avec un second réseau sans fil au moyen d'un second protocole, le second protocole indiquant que, en réponse à un signal d'un format prédéfini, un dispositif sur le second réseau ne doit pas émettre sur le second réseau au cours d'au moins une période de temps, le procédé comportant les étapes ci-dessous consistant à :
transmettre un signal selon le second protocole, de façon à indiquer à des dispositifs sur le second réseau qu'ils ne doivent pas émettre au cours d'une première période de temps, et
subséquemment à l'étape de transmission ci-dessus, transmettre ou recevoir des signaux au moyen du premier protocole au cours de la première période de temps ;
le procédé étant **caractérisé en ce que** les critères ci-dessous sont utilisés en vue de déterminer le signal servant à indiquer à des dispositifs sur le second réseau qu'ils ne doivent pas émettre au cours d'au moins une première période de temps :
(i) lorsque le signal émis au moyen du premier protocole est sur le point de débuter, l'étape consistant à émettre un signal selon le second protocole de façon à indiquer à des dispositifs sur le second réseau qu'ils ne doivent pas émettre au cours d'une première période de temps comprend un envoi aux dispositifs, immédiatement avant le début de la communication entre le dispositif de communication et le premier réseau sans fil, d'une trame indiquant la période de temps au cours de laquelle le dispositif de communication sera en communication avec le premier réseau sans fil ;
(ii) lorsque le signal émis au moyen du premier protocole est connu à l'avance, l'étape consistant à émettre un signal selon le second protocole de façon à indiquer aux dispositifs sur le second réseau qu'ils ne doivent pas émettre au cours d'une première période de temps, comprend un envoi aux dispositifs, d'une trame contenant une indication d'au moins une période de temps au cours de laquelle le dispositif de communication peut être en communication avec le premier réseau sans fil ; et
(iii) lorsque le signal émis au moyen du premier protocole comprend un transfert de données en vrac et qu'il n'existe pas de restrictions de temps de latence sur le second réseau, l'étape de signalisation aux dispositifs sur le second réseau visant à indiquer qu'ils ne doivent pas émettre au cours d'une première période de temps, comprend un envoi, aux dispositifs, d'une trame contenant une indication d'une période de temps qui suit immédiatement la trame au cours de laquelle le dispositif de communication peut être en communication avec le premier réseau sans fil.
